# EUROPÄISCHE PATENTSCHRIFT

(11) **EP 3 834 263 B1**
(45) Veröffentlichungstag und Bekanntmachung des Hinweises auf die Patenterteilung: **24.09.2025**
(21) Anmeldenummer: 19746064.5
(22) Anmeldetag: 24.07.2019
(51) Int. Cl.: H02G 3/08, H02G 3/22, H02G 15/013, H02G 15/007

(54) **TÜLLE**
GROMMET
DOUILLE

(30) Priorität: 10.08.2018 DE 102018213483
(43) Veröffentlichungstag der Anmeldung: 16.06.2021
(73) Patentinhaber: icotek project GmbH & Co. KG, 73569 Eschach (DE)
(72) Erfinder: EHMANN, Bruno, 73563 Mögglingen (DE); EHMANN, Valentin, 73525 Schwäbisch Gmünd (DE)
(74) Vertreter: Dr. Weitzel & Partner
(86) Internationale Anmeldenummer: PCT/EP2019/069886
(87) Internationale Veröffentlichungsnummer: WO 2020/030429

(56) Entgegenhaltungen:
- EP-A2- 1 498 994
- WO-A1-95/15603
- DE-A1- 10 349 996
- DE-B4- 112010 005 160
- DE-T2- 69 707 645
- FR-A1- 2 825 841
- US-A- 4 889 298

## Beschreibung

Die Erfindung betrifft eine Tülle aus einem zumindest abschnittsweise elastischen Material zur Aufnahme wenigstens eines länglichen Gegenstandes, insbesondere eines Kabels, zur Zugentlastung und Abdichtung nach der im Oberbegriff von Anspruch 1 näher definierten Art.

Derartige Tüllen, welche über einen Schlitz seitlich aufklappbar sind, um auch vorkonfektionierte Kabel, Schläuche, Rohre, Leitungen oder dgl. aufnehmen zu können, sind mit den entsprechenden Lochungen zur Aufnahme der länglichen Gegenstände allgemein bekannt. Vorkonfektioniert bedeutet dabei, dass die länglichen Gegenstände mit Anbauteilen versehen sind, die über den Durchmesser der länglichen Gegenstände hinausragen, z.B. Stecker bei Kabeln oder Flansche bei Rohren. Rein beispielhaft kann in diesem Zusammenhang auf die deutsche Patentschrift DE 10 2009 060 988 B3 der Anmelderin hingewiesen werden, welche derartige Tüllen zur Zugentlastung in einer Kabeltrageinheit zeigt. Daneben sind weitere Tüllen mit Membranen gezeigt, welche nicht geschlitzt sind, und welche zum Durchstoßen mit Kabeln ausgebildet sind, um so eine Abdichtung zu gewährleisten.

Den gattungsgemäßen Stand der Technik beschreibt die EP 0 514 174 A1. Diese zeigt eine Tülle aus elastischem Material, welche geschlitzt ausgeführt ist und zur Aufnahme von zwei Kabeln ausgebildet ist. Sie zeigt in Längsrichtung der Kabel oder gegebenenfalls auch anderer länglicher Gegenstände drei aufeinander folgende Membranen, welche gegenüber dem äußeren Material des Rahmenelements der Tülle in Längsrichtung des aufzunehmenden Kabels relativ dünn ausgebildet sind, um so, wie es in der Schrift ausgeführt ist, Kabel verschiedenen Durchmessers aufnehmen zu können.

In der Praxis hat sich gezeigt, dass dieser Aufbau mit den drei Membranen relativ aufwändig in der Herstellung und relativ groß bezüglich seiner Ausdehnung in Längsrichtung des aufzunehmenden Kabels ist. Darüber hinaus ist es so, dass die Abdichtung häufig nicht mit ausreichender Qualität gewährleistet werden kann, da die Kabel innerhalb der Membranen zum seitlichen Verkanten neigen und so das sie vollständig umgebende elastische Material der Membranen durch Ausstülpungen oder Ausbeulungen die Dichtheit beeinträchtigt. Die Schrift versucht dies durch die drei hintereinandergeschalteten Membranen bis zu einem gewissen Grad abzufedern, erkauft sich dies jedoch durch den Nachteil einer extrem großen Baulänge in der Längsrichtung der eingelegten Kabel.

Wie bereits erwähnt, kann durch eine größere Anzahl von Membranen mit einer jeweils gleich großen Lochung die Gefahr eines seitlichen Verkantens reduziert werden. Auch wenn dies gelingt, ist es weiterhin ein Nachteil, dass die Membran um das gesamte Kabel umlaufend ausgebildet ist. Um bei verschieden großen Kabeln eine ausreichende Elastizität zu gewährleisten, führt dies in der Praxis zu einer mangelnden Zugentlastung und insbesondere bei großen Kabeldurchmessern auch zu einer mangelnden Dichtheit, trotz der drei hintereinander angeordneten Membranen, da das Membranmaterial sehr leicht in Längsrichtung der Kabel umgeknickt, wodurch sowohl die Zugentlastung als auch die Dichtheit nachteilig beeinflusst.

Außerdem kann auf die EP 1 498 994 A2 verwiesen werden. Diese zeigt ein aufklappbare Kabeltülle mit einer in Laufrichtung des Kabels in das Innere der Tülle versetzen Membran. Diese weist eine asymmetrische Lochung auf. Die DE 103 49 996 A1 zeigt einen ähnlichen Aufbau, wobei hier die Membran die Tülle in der einen Richtung längs des aufzunehmenden Kabels begrenzt.

Zum weiteren Stand der Technik kann ferner die FR 2 825 841 A1 erwähnt werden, welche eine Fixierung von Kabeln in einem geteilten Aufbau mittels einzelner Klemmen zeigt. Die US 4 889 298 A zeigt eine Hauseinführung von Kabeln, welche durch eine Hauswand geführt werden. Die Abdichtung erfolgt über Gummiblöcke, sowohl im Innenbereich der Wand und beabstandet dazu im Außenbereich der Wand angeordnet sind. Die DE 697 07 645 T2 beschreibt eine Kabelaufnahme mit einer Kompressionsfeder. Die DE 11 2010 005 160 B4 zeigt ein Kabeltülle mit einem Schalldämpfer.

Das Dokument WO 95/15603 A1 beschreibt eine Einrichtung zum Umschließen von länglichen Gegenständen. Im Wesentlichen ist dabei ein Gehäuse beschrieben, welches an seinen beiden beabstandeten Enden jeweils von einer Tülle verschlossen ist. Diese Tülle weist eine integrierte metallische Verstärkung auf und lässt sich seitlich aufklappen, um den länglichen Gegenstand bzw. das Kabel einzulegen. Um die Durchgangsöffnung der Tülle herum sind dabei über den gesamten Umfang verteilt abwechselnd einzelne Bereiche mit geringer Elastizität und andere Bereiche mit höherer Elastizität angeordnet. Durch die Vielzahl von sich abwechselnden Zonen unterschiedlicher Elastizität um den Öffnungsdurchmesser herum soll einerseits eine gute Abdichtung und andererseits eine gute Zugentlastung erreicht werden.

Die Aufgabe der vorliegenden Erfindung besteht nun darin, eine verbesserte Tülle anzugeben, welche auch bei sich relativ stark unterscheidenden Durchmessern der eingelegten länglichen Gegenstände eine sehr gute Abdichtung und eine gute Zugentlastung gewährleistet.

Erfindungsgemäß wird diese Aufgabe durch eine Tülle mit den Merkmalen im Anspruch 1, und hier insbesondere im kennzeichnenden Teil des Anspruchs 1 gelöst.

Die Tülle selbst besteht aus einem äußeren Rahmenelement, welches aufklappbar ist. Dieses Rahmenelement kann -wie im Stand der Technik- aus einem elastischen Material ausgebildet sein. Prinzipiell wäre es auch denkbar, das Rahmenelement beispielsweise aus einem weniger elastischen Kunststoff auszubilden, welcher auf einer Seite über ein Filmscharnier oder ein ähnliches flexibles Verbindungselement zusammengehalten wird und entsprechend aufklappbar ist. Das Rahmenelement ist dann mit wenigstens zwei in Längsrichtung des aufzunehmenden länglichen Gegenstands beabstandeten Membranen versehen, welche fluchtend zueinander jeweils eine gleich große Lochung zur Aufnahme des länglichen Gegenstands aufweisen, wie dies auch in der oben genannten EP-Schrift von der American Telephone and Telegraph Company der Fall ist.

Erfindungsgemäß ist es nun jedoch vorgesehen, dass die jeweilige Lochung der wenigstens zwei Membranen das Material des Rahmenelements auf der Seite des Schlitzes, also auf der Seite, auf welcher das Rahmenelement aufklappbar ist, berührt. Durch diese Berührung der Lochung und des Rahmenelements auf der Seite des Schlitzes entsteht die Möglichkeit, dass verschiedene längliche Gegenstände unterschiedlichen Durchmessers sehr gut aufgenommen werden können, und dies bei einer sehr guten Abdichtung einerseits und einer ausreichenden Zugentlastung andererseits. Die Anpassung bezüglich der unterschiedlichen Durchmesser der länglichen Gegenstände erfolgt so also immer im Bereich der wenigstens zwei Membranen, da der längliche Gegenstand in der Lochung auf der anderen Seite an dem verschlossenen Rahmenelement anliegt. Das Rahmenelement begrenzt so auf der einen Seite zuverlässig dessen Position, sodass der größte Teil des Durchmesserunterschieds hinsichtlich der Abdichtung und der Zugentlastung von den wenigstens zwei Membranen aufgenommen werden kann. Darüber hinaus bietet der Aufbau den Vorteil, dass die räumliche Größe der Fläche der Membran in diesem Fall bei der vorgegebenen Bauform maximal ist, da ja durch die Anlage der Lochung und des später aufgenommenen länglichen Gegenstands an dem Rahmenelement auf der einen Seite der gesamte Freiraum innerhalb des Rahmenelements auf der anderen Seite durch die dann relativ großflächigen Membranen ausgefüllt wird. Dies trägt zu der vorteilhaften Wirkungsweise des Aufbaus bei.

Die Tülle kann dabei für einen länglichen Gegenstand in einem Paar der Lochungen oder auch für mehrere längliche Gegenstände in jeweils einem Paar der Lochungen vorgesehen sein. Dann hätten die Membranen mit den Lochungen jeweils für jedes der Paare der Lochungen einen Schlitz, sodass beispielsweise - wie im Stand der Technik - ein Paar einer Lochung mit einem Schlitz nach rechts und ein Paar einer Lochung mit einem Schlitz nach links vorgesehen wäre. Zur Aufnahme von vier länglichen Gegenständen wären dies dann zwei übereinander angeordnete Paare von Lochungen, welche jeweils nach rechts und zwei übereinander angeordnete Paare von Lochungen, welche jeweils nach links über den Schlitz offen sind. Selbstverständlich wäre es auch denkbar, die Schlitze nicht nur nach rechts und nach links sondern auch nach oben und nach unten verlaufen zu lassen.

Das Rahmenelement und die Membran können wie bereits erwähnt mehrteilig ausgebildet sein, also beispielsweise ein Rahmenelement aus relativ festem Kunststoff, welches über ein Filmscharnier oder Ähnliches klappbar ist, und an welches die Membranen, beispielsweise zwei Membranen, an den jeweiligen Seitenflächen in Längsrichtung des aufzunehmenden länglichen Gegenstands angespritzt werden können. Das Rahmenelement und die Membranen können gemäß einer vorteilhaften Weiterbildung der Idee jedoch auch aus demselben Material ausgebildet sein. Dies ist hinsichtlich der Herstellung sehr einfach und effizient. Die unterschiedlichen Eigenschaften hinsichtlich der Elastizität der Membranen einerseits und des Rahmenelements andererseits, welches durchaus elastisch, jedoch nicht so weich wie die Membranen sein sollte, lassen sich dann einfach durch unterschiedliche Wandstärken des Materials in Längsrichtung des aufzunehmenden länglichen Gegenstands erreichen. Bei diesem Aufbau ist es ferner denkbar, dass die Membranen und das Rahmenelement einteilig ausgebildet sind. Dies muss jedoch nicht so sein. Das Rahmenelement und die Membranen können beispielsweise auch mittig in Längsrichtung des aufzunehmenden länglichen Gegenstands geteilt sein, sodass jedes Teilelement beispielsweise eine der Membranen aufweist. Werden die Teilelemente dann miteinander verbunden, beispielsweise verschweißt oder verklebt, entsteht die erfindungsgemäße Tülle mit den eingangs geschilderten vorteilhaften Eigenschaften.

Bei der erfindungsgemäßen Tülle ist es nun vorgesehen, dass wenigstens eine, vorzugsweise alle, der Membranen über den Umfang der Lochungen drei Zonen unterschiedlicher Elastizität aufweist.

Ein solcher Aufbau der Membran bzw. der Membranen mit Zonen unterschiedlicher Elastizität erlaubt es, die Membran bei der Konstruktion ideal ihrer Aufgabe anzupassen. Durch die Zonen unterschiedlicher Elastizität lassen sich die Bereiche, welche typischerweise eine stärkere Verformung erfahren, entsprechend elastischer gestalten, um hier eine sehr gute Abdichtung zu gewährleisten. Gleichzeitig können Bereiche, welche eine etwas geringere Verformung erfahren, mit geringerer Elastizität ausgebildet werden, um dort die Zugentlastung zu verbessern.

Erfindungsgemäß weist die quer zur Längsrichtung des aufzunehmenden länglichen Gegenstands mittlere, zwischen den anderen Zonen angeordnete Zone eine höhere Elastizität als die beiden benachbarten Zonen auf. Wird das Rahmenelement selbst als weitere Zone gesehen, so wäre dies eine Zone mit noch geringerer Elastizität als die Zonen innerhalb der Membran, nur um dies der Vollständigkeit halber zu erwähnen. Der beschriebene Aufbau mit der Zone der höchsten Elastizität in der Mitte ermöglicht ein ideales Ausweichen in diesem Bereich, bei einem gleichzeitigen festen "Zupacken" der benachbarten Zonen am Umfang des länglichen Gegenstandes. Damit ist sowohl eine gute Abdichtung als auch eine gute Zugentlastung gewährleistet.

Gemäß einer sehr vorteilhaften Weiterbildung der Idee können dabei jeweils genau zwei Membranen vorgesehen sein. Ein solcher Aufbau mit zwei Membranen ist bei der eingesetzten Konstruktion, bei welcher die jeweilige Lochung der Membran das Material des Rahmenelements auf der Seite des Schlitzes berührt, für eine ausreichende Abdichtung und Zugentlastung ausreichend. Die Verwendung von zwei Membranen in Längsrichtung des aufzunehmenden länglichen Gegenstands und damit einem Zwischenraum zwischen diesen Membranen ermöglicht dabei einen in Längsrichtung des aufzunehmenden länglichen Gegenstands kompakten Aufbau der Tülle, sodass diese entsprechend Platz sparend realisiert werden kann.

Eine besonders günstige Weiterbildung der erfindungsgemäßen Tülle sieht es ferner vor, dass das Rahmenelement im Bereich der Berührung durch die Lochungen eine Aussparung aufweist. Hierdurch wird die Lochung und damit der in den Lochungen aufzunehmende längliche Gegenstand noch weiter in die Richtung des Rahmenelements verschoben, was die Größe der Membranen nochmals erhöht, und damit eine hohe Flexibilität beim Abdichten unterschiedlicher Durchmesser ermöglicht. Das Material der Membranen kann so ideal ausweichen und sich dichtend und zugentlastend an längliche Gegenstände verschiedener Durchmesser sehr gut anpassen.

Gemäß einer sehr günstigen Ausgestaltung ist es dabei so dass die jeweilige Lochung im Bereich jedes Querschnitts senkrecht zur Längsrichtung des aufzunehmenden länglichen Gegenstands das Rahmenelement in dem Punkt berührt, in dem die der Lochung zugewandten Enden des Schlitzes liegen. Die Lochung berührt den Schlitz also nur in einem Punkt. Die Lochungen und das Rahmenelement überlappen sich also im Bereich des Schlitzes, unabhängig von dessen Verlauf in der Längsrichtung nicht. Insbesondere bei einem in der Längsrichtung linear verlaufenden Schlitz kann es nun vorzugsweise so sein, dass die Lochungen das Rahmenelement im Bereich des Schlitzes entlang einer Linie senkrecht zu einer Tangente am Berührungspunkt zwischen der Lochung und dem verpressten und damit weitgehende linienförmigen Schlitz berühret. Eine solche Berührung ist ideal, da der längliche Gegenstand dann nur entlang einer solchen, insbesondere geraden, Linie an dem Rahmenelement anliegt, was letztlich eine minimale Anlage am Rahmenelement und eine Anlage über den größten Teil des Umfangs des länglichen Gegenstands an der Membran ermöglicht. Damit wird die gute Abdichtung und Zugentlastung noch weiter unterstützt.

Da die eingelegten länglichen Gegenstände beispielsweise Kabel, Rohre, Schläuche oder dgl. typischerweise einen runden Querschnitt haben, kann es gemäß einer sehr vorteilhaften Weiterbildung der Idee vorgesehen sein, dass die Aussparung in dem Rahmenelement im Querschnitt gesehen kreissegmentförmig ausgebildet ist. Eine solche kreissegmentförmige Aussparung eröffnet dabei die Möglichkeit, dass der längliche Gegenstand auch an dem Rahmen anliegt, was einerseits dem Verhindern einer Verkantung und andererseits einer Optimierung der Abdichtung und Zugentlastung vorteilhaft entgegenkommt.

Entsprechend einer weiteren sehr vorteilhaften Ausgestaltung der Idee kann es dabei vorgesehen sein, dass das Kreissegment einen größeren Durchmesser als die Lochung aufweist. Dieser Aufbau ermöglicht im Falle einer Aufnahme eines länglichen Gegenstands mit relativ kleinem Durchmesser, dass dieser trotz der kreissegmentförmigen Aussparung tangential an dem Material des Rahmenelements, insbesondere entlang eines geraden Schlitzes anliegt und dennoch durch die Aussparung eine relativ große Fläche der Membran ermöglicht wird. Mit größer werdendem Durchmesser nähert sich die Anlage des länglichen Gegenstands dann immer mehr einer direkten Anlage an dem Rahmen an, wobei oberhalb und unterhalb des tangentialen Anlagebereichs minimale Reste der Membran verbleiben, um verschiedene Durchmesser auch in diesem Bereich sicher und zuverlässig aufzunehmen und abzudichten.

Hinsichtlich der Herstellung der Membran ist es prinzipiell denkbar, dies durch einen unterschiedlichen Aufbau und unterschiedliche Materialien der Membran zu realisieren. Gemäß einer außerordentlich günstigen und vorteilhaften Weiterbildung dieser Idee kann es jedoch vorgesehen sein, dass die Zonen unterschiedlicher Elastizität eine unterschiedliche Dicke der Membran aufweisen. Dies erlaubt es, den Aufbau zumindest der Membran aus einem einzigen Material einfach und effizient zu realisieren. Die unterschiedliche Elastizität kann einfach durch eine unterschiedliche Dicke der Membran bei der Herstellung, beispielsweise einem Spritzgussprozess oder dgl. erreicht werden. Dies erlaubt auch komplexe Formen für die einzelnen Zonen unterschiedlicher Elastizität, welche auf diese Art sehr einfach hergestellt werden können.

Gemäß einer sehr vorteilhaften Weiterbildung der Idee kann es dabei vorgesehen sein, dass die Zonen von der Lochung ausgehend gerade Grenzen zueinander aufweisen. Diese geraden Grenzen sind besonders einfach und effizient in der Herstellung, insbesondere auch in der Herstellung von entsprechenden Formen, um die Membranen bzw. die Tülle beispielsweise in einem Spritzgussprozess zu realisieren.

Eine sehr vorteilhafte Weiterbildung dieser Idee sieht es dabei vor, dass Verlängerungen der Grenzen der Zonen sich im Punkt der Anlage der Lochung an dem Rahmenelement schneiden. Ausgehend von diesem Punkt werden also die geraden Grenzen der Zonen realisiert. Damit kommt es zu einem Aufbau, bei welchem über den Umfang jeder der Lochungen unterschiedliche Zonen herrschen, sodass nicht nur die Membran als Ganzes, sondern insbesondere auch der Teil der Membran, der unmittelbar an dem länglichen Gegenstand, welcher ja in der Lochung aufgenommen wird, anliegt, unterschiedliche Elastizitäten aufweist. Alternativ zu einer solchen geraden Ausgestaltung ist selbstverständlich auch die Verwendung von gebogenen Grenzen oder beliebig anders verlaufenden Grenzen zwischen den einzelnen Zonen prinzipiell denkbar.

In der Praxis hat es sich herausgestellt, dass als guter Kompromiss hinsichtlich des Aufwands bei der Herstellung einerseits und der Funktionalität andererseits drei Zonen mit zwei unterschiedlichen Elastizitäten ideal sind. Gemäß einer sehr vorteilhaften Weiterbildung der erfindungsgemäßen Tülle mit den Zonen unterschiedlicher Elastizität ist es demnach vorgesehen, dass drei Zonen mit zwei unterschiedlichen Elastizitäten vorhanden sind, wobei die quer zur Längsrichtung des aufzunehmenden länglichen Gegenstands mittlere, zwischen den anderen Zonen angeordnete Zone eine höhere Elastizität als die beiden benachbarten Zonen aufweist.

Eine sehr günstige Weiterbildung der erfindungsgemäßen Tülle kann es nun ferner vorsehen, dass die beiden oder die beiden äußeren Membranen in Längsrichtung des aufzunehmenden länglichen Gegenstands gegenüber der äußeren Begrenzung der Tülle nach innen versetzt angeordnet sind. Die Tülle kann also gemäß der Erfindung beispielsweise in der Art eines Quaders, eines Würfels oder auch eines Zylinders oder drgl. ausgebildet sein. Die hier beschriebene vorteilhafte Weiterbildung versetzt den Aufbau der Membranen gegenüber den äußeren Flächen eines solchen Würfels oder Quaders nach innen, sodass also beispielsweise die beiden Membranen, oder wenn mehr Membranen vorhanden sind, die beiden äußeren Membranen, gegenüber der Außenfläche des Quaders nach innen versetzt angeordnet sind. Wird die Tülle beispielsweise in einer Kabeldurchführung wie dem in dem eingangs genannten deutschen Patent der Anmelderin beschriebenen Rahmen oder Ähnlichem oder auch in einem Gehäuse aufgenommen, dann ist es häufig so, dass die Tüllen formschlüssig mit dem Gehäuse oder dem Rahmen zusammenwirken, und zwar typischerweise in dem in Längsrichtung des aufzunehmenden länglichen Gegenstands mittleren Bereich, sodass auf eine gegenüber der in Längsrichtung äußeren Fläche zurückversetzten Membran höhere Kräfte wirken können als auf eine direkt an der äußeren Fläche angeordneten Membran. Die gegenüber der äußeren Fläche zurückversetzten Membranen bzw. äußeren Membranen, je nach Gesamtzahl der Membranen, haben also den Vorteil, dass größere Kräfte zum Verpressen der Membranen und damit letztlich größere Kräfte zur Abdichtung und Zugentlastung möglich werden.

Der Schlitz in dem Rahmenelement kann dabei grundsätzlich beliebig realisiert werden. So sind aus den beiden eingangs genannten Schriften einerseits linear verlaufende Schlitze und andererseits in einer Wellenform verlaufende Schlitze bekannt. Gemäß einer besonders günstigen Weiterbildung der Idee kann es jedoch vorgesehene sein, dass der Schlitz in Längsrichtung des aufzunehmenden länglichen Gegenstandes wenigstens eine, insbesondere trapezförmige, Stufe aufweist. Dies ermöglicht eine gutes ineinandergreifen der beteiligten Oberflächen, welche den Schlitz ausbilden. Dies gilt insbesondere auch in einer Kombination mit gebogenen oder linearen Abschnitten des Schlitzes, bevorzugt mit linearen Abschnitten des Schlitzes in Bereich der Membranen/Lochungen.

Dies kann gemäß einer vorteilhaften Weiterbildung auch noch dadurch verbessert werden, dass die Teile des Rahmenelements im Bereich des Schlitzes wenigstens ein Führungselement an dem einen Teil und wenigstens eine korrespondierende Öffnungen an dem anderen Teil aufweisen. Damit wird die exakte Positionierung der Teile zueinander verbessert. Das Führungselement ist dabei insbesondere einteilig mit dem Rahmenelement ausgebildet.

Eine andere Weiterbildung sieht es alternativ oder insbesondere ergänzend vor, dass der Schlitz quer zur Längsrichtung des aufzunehmenden länglichen Gegenstandes wenigstens eine Stufe aufweist. Dies verlängert zwar die Abzudichtende Fläche, kann aber ähnlich wie die Führungselemente dabei helfen die Positionierung der Teile des Rahmenelements gegeneinander zu verbessern.

Weitere vorteilhafte Ausgestaltungen der erfindungsgemäßen Tülle ergeben sich auch aus den Ausführungsbeispielen, welche nachfolgend unter Bezugnahme auf die Figuren näher beschrieben sind.

Dabei zeigen:
- Fig. 1: eine dreidimensionale Ansicht einer möglichen Ausführungsform einer Tülle gemäß der Erfindung;
- Fig. 2: eine Seitenansicht der Tülle mit Blick in der Längsrichtung des aufzunehmenden länglichen Gegenstands;
- Fig. 3: eine Draufsicht auf die Tülle;
- Fig. 4: eine erste möglichen Ausführungsform der Tülle in einem Schnitt gemäß der Linie B-B in Fig. 2;
- Fig. 5: eine weitere mögliche Ausführungsform der Tülle in einem Schnitt gemäß der Linie B-B in Fig. 2;
- Fig. 6: eine dritte mögliche Ausführungsform der Tülle in einem Schnitt gemäß der Linie B-B in Fig. 2;
- Fig. 7: die Ausführungsform der Tülle gemäß Fig. 6 in einem Schnitt gemäß der Linie A-A in Fig. 3;
- Fig. 8: einen Ausschnitt aus der Tülle bzw. ihrer Membran in einem Schnitt gemäß der Linie C-C in Fig. 7;
- Fig. 9: eine weitere Ausführungsform der erfindungsgemäßen Tülle in einem Schnitt gemäß der Linie A-A in Fig. 3;
- Fig. 10: eine weitere Ausführungsform der erfindungsgemäßen Tülle in einem Schnitt gemäß der Linie B-B in Fig. 2;
- Fig. 11: die Ausführungsform der Tülle gemäß Fig. 10 in einem Schnitt gemäß der Linie der Linie A-A in Fig. 3;
- Fig. 12: eine weitere alternative Ausführungsform der Tülle in einem Schnitt gemäß der Linie B-B in Fig. 2;
- Fig. 13: die Ausführungsform der Tülle gemäß Fig. 12 in einem Schnitt gemäß der Linie A-A in Fig. 3;
- Fig. 14: eine dreidimensionale Ansicht einer alternativen Ausführungsform der Tülle;
- Fig. 15: eine mögliche Ausführungsform des Schlitzes in einer Variante der Tülle;
- Fig. 16: ein mögliches Detail des Schlitzes, welche für verschiedene Formgebungen des Schlitzes realisiert werden kann;
- Fig. 17: eine weitere mögliche Variante des Schlitzes, welche mit den anderen Varianten kombinierbar ist; und
- Fig. 18: eine beispielhafte Anwendung der erfindungsgemäßen Tüllen.

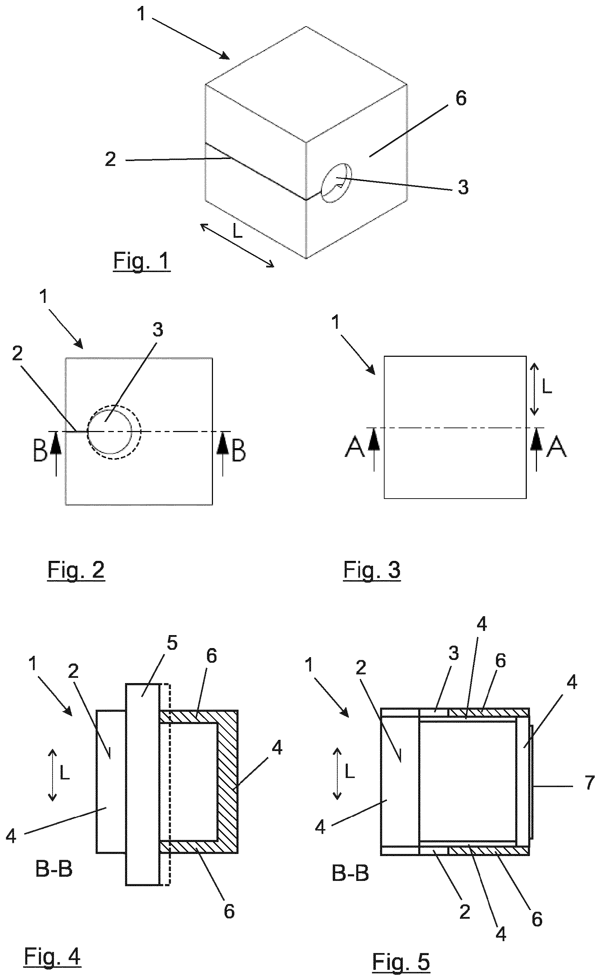

In der Darstellung der Figur 1 ist eine schematische Prinzipdarstellung einer Tülle 1 in einer möglichen Ausführungsform gemäß der Erfindung zu erkennen. Die Tülle 1 soll in dem hier dargestellten Ausführungsbeispiel einstückig und aus einem einzigen Material, beispielsweise einem elastischen Polymer, ausgebildet sein. Die Tülle 1 kann in an sich bekannter Art und Weise über einen Schlitz 2 aufgeklappt werden, um einen länglichen Gegenstand, wie beispielsweise ein Kabel 5, welches in der Darstellung der Figur 4 gezeigt ist, aufzunehmen. Durch die Verbindung der Lochung 3 mit dem Schlitz 2 lässt sich dabei auch ein vorkonfektioniertes Kabel 5, also eines, das beispielsweise bereits einen Stecker aufweist oder dgl., problemlos in die Tülle 1 einlegen, weil dieses durch die Lochung 3 eben nicht durchgefädelt, sondern seitlich durch Aufklappen entlang des Schlitzes 1 eingelegt werden kann. Die Tülle wird dann über dem länglichen Gegenstand bzw. dem Kabel 5 wieder zugeklappt und beispielsweise in entsprechenden Aufnahmen in einem Gehäuse, einem Rahmen oder dgl. verpresst, um das Kabel 5 sicher zu halten, also eine Zugentlastung in Längsrichtung L zu gewährleisten und die Durchführung des Kabels durch die Lochung 3 bzw. die Tülle 1 abzudichten.

In der Figur 2 ist zu erkennen, dass die Lochung 3 einen ersten Durchmesser aufweist. Mit gestrichelter Linie ist ein zweiter Durchmesser angedeutet. Der Aufbau ist nun so realisiert, dass längliche Gegenstände, insbesondere Kabel 5, mit unterschiedlichen Durchmessern, insbesondere mit Durchmessern zwischen dem Durchmesserbereich der Lochung 3 bzw. minimal größerem Durchmesser einerseits und dem hier gestrichelt eingezeichneten Durchmesser andererseits sicher und zuverlässig zugentlastend und abdichtend in der Tülle 1 aufgenommen werden können.

In der Darstellung der Figur 3 ist eine Draufsicht auf die Tülle 1 dargestellt, primär, um über die Line A-A die Lage von nachfolgenden Schnittdarstellungen zu verdeutlichen. Dementsprechend ist in Figur 2 eine Linie B-B eingezeichnet.

In der Darstellung der Figur 4 ist nun zu erkennen, dass bei einer Ansicht eines Schnitts gemäß der Linie B-B aus Figur 2 der Aufbau der Tülle 1 so ist, dass einerseits ein Rahmenelement 4 aufweist, von welchem die in Figur 4 rechts dargestellte Seite geschnitten und die in Figur 4 links dargestellte Seite entlang des Schlitzes 2 erkennbar ist. In Längsrichtung L des hier gezeigten und mit 5 bezeichneten Kabels bzw. länglichen Gegenstands befinden sich beabstandet voneinander zwei Membranen 6, welche als solche eine höhere Elastizität aufweisen als das Rahmenelement 4, beispielsweise bei einem einteiligen Aufbau oder einem Aufbau aus demselben Material des Rahmenelements 4 und der Membranen 6 durch eine unterschiedliche Materialstärke, insbesondere in Längsrichtung L des aufzunehmenden Kabels 5. Durch die beiden Membran 6 kann nun das Kabel 5 in der Tülle 1 aufgenommen werden. Dabei können auch Kabel 5 unterschiedlichen Durchmessers problemlos aufgenommen werden. Hier ist analog zur Darstellung in Figur 2 ein Kabel 5 mit einem minimal größeren Durchmesser als die Lochung 3 angedeutet. Gestrichelt ist außerdem ein dickeres Kabel 5 dargestellt, welches ebenfalls noch in der Tülle 1 abdichtend und zugentlastend aufgenommen werden kann. Der Bereich liegt dabei je nach Größe der Tülle 1 bei einigen Millimetern, beispielsweise bei einer Tülle 1 mit einer Breite und/oder Höhe quer zur Längsrichtung L in der Größenordnung von 15 bis 25 mm. Bei entsprechend größeren Tüllen sind auch größere Unterschiede zwischen dem minimalen aufzunehmenden Durchmesser des Kabels 5 und dessen maximalem aufnehmbaren Durchmesser denkbar.

Eine alternative Ausführungsform, welche eingangs der Beschreibung schon angedeutet worden ist, findet sich in der Darstellung der Figur 5. Anders als bei den bisherigen Aufbauten ist das Rahmenelement 4 hier beispielsweise aus einem härteren Kunststoffmaterial, insbesondere einem faserverstärkten Kunststoff ausgebildet. Über ein Filmscharnier 7 ist das dann zweiteilig ausgeführte Rahmenelement mit dem Schlitz 2 auf der einen Seite entsprechend aufklappbar. Nun wird im zugeklappten Zustand jeweils oben und unten in der Darstellung der Figur 5 eine Membran 6 angebracht, beispielsweise angespritzt. Die elastische Membran 6 erfüllt dann, vergleichbar zu den obigen Ausführungen die beschriebene Funktionalität und erlaubt auch das Aufklappen des Rahmenelements 4 über das Filmscharnier bis zu einem gewissen Grad, welcher ausreicht, um vorkonfektionierte Kabel über den Schlitz 2 in die Lochungen 3 einzubringen.

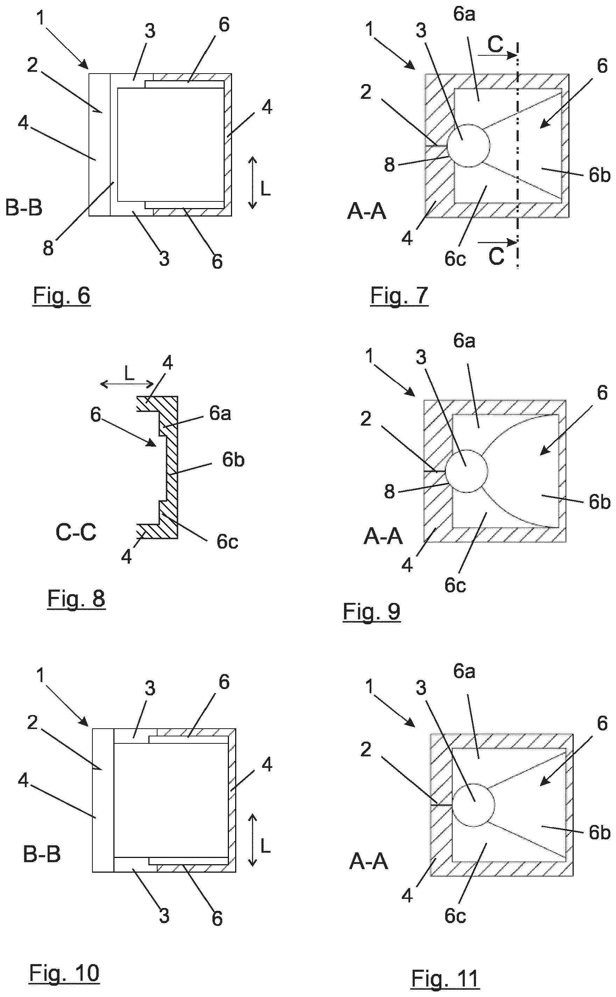

In der Darstellung der Figur 6 ist ein weiterer Schnitt gemäß der Linie B-B aus Fig. 2 dargestellt. Bei dieser Ausführungsvariante ist erkennbar, dass die Membran 6 in der Figur 7, einer Schnittdarstellung gemäß der Linie A-A in Fig. 3 desselben Aufbaus unterschiedliche Wandstärken aufweist, worauf nachfolgend noch eingegangen wird. Ferner ist zu erkennen, dass das Rahmenelement 4 und die Lochung 3 so ausgebildet sind, dass durch die Lochung 3 in dem Rahmenelement 4 in der Darstellung der Figur 6 auf der linken Seite eine Aussparung 8 entsteht. Die Lochung berührt also nicht nur das Rahmenelement 4, wie in den Darstellungen der Figuren 2, 4 und 5, sondern ragt ein wenig in das Rahmenelement 4 hinein. Die Aussparung 8 ermöglicht so eine letztlich noch größere Fläche der Membranen 6 einerseits und ermöglicht eine sehr gute Anlage des aufzunehmenden länglichen Gegenstands bzw. Kabels 5 an dem Rahmenelement 4 im Bereich des Schlitzes 2 andererseits.

Die bereits angesprochenen unterschiedlichen Stärken des Materials der Membranen 6 lassen sich nun insbesondere an den Darstellungen in den Figuren 7 und 8 näher erklären. Die Schnittdarstellung gemäß der Linie A-A in Fig. 2 in der Darstellung der Figur 7 zeigt in der Membran 6 und in der Aussparung 8 in dem Rahmenelement 4 die Lochung 3. Außerdem ist die Membran 6 selbst in drei unterschiedliche Zonen 6a, 6b und 6c aufgeteilt. Die Grenzen zwischen diesen Zonen 6a, 6b, 6c der Membran 6 laufen in diesem Ausführungsbeispiel gerade und würden sich, würde man sie in die Lochung 3 hinein verlängern, im Punkt der Anlage der Lochung 3 an dem Schlitz 2 schneiden. Die einzelnen Zonen 6a, 6b, 6c weisen nun unterschiedliche Elastizitäten auf. Dies lässt sich beispielsweise hinsichtlich der Herstellung ideal dadurch erreichen, dass das Material der Membran 6 im Bereich der einzelnen Zonen 6a, 6b, 6c eine unterschiedliche Materialstärke aufweist. In der Darstellung der Figur 8, einer Schnittdarstellung eines Ausschnitts aus der Tülle 1 gemäß der Linie C-C in Fig. 7 ist dies zu erkennen. Die in der Darstellung der Figuren 7 und 8 oben und unten angeordneten Zonen 6a und 6c der Membran 6 sind entsprechend dicker ausgeführt und damit weniger elastisch als die dazwischen angeordnete mittlere Zone 6b der Membran 6. Hierdurch lässt sich in dem Bereich der Zonen 6a, 6c mit mittlerer Elastizität eine ausreichende Verformung zur Abdichtung unterschiedlicher Durchmesser der Kabel 5 bzw. länglichen Gegenstände erreichen. Die mit einer höheren Elastizität ausgestattete Zone 6b der Membran 6 erlaubt dann eine ausreichende Verformung der Membran 6, um eine sichere und zuverlässige Anlage und Abdichtung um den gesamten Umfang des Kabels 5 herum realisieren zu können. Die etwas steiferen Zonen 6a, 6c in unmittelbarer Nachbarschaft zu dem Teil des Rahmenelements 4, an dem die Lochung 3 anliegt, erlauben dabei eine ausreichende Zugentlastung.

In der Darstellung der Figur 9 ist eine Alternative zu der Darstellung in Figur 7 gezeigt, welche in dem Schnitt gemäß der Linie B-B in Fig. 2 genauso aussehen würde wie die Darstellung in Fig. 6. Der einzige Unterschied besteht nun darin, dass die Grenzen zwischen den Zonen 6a, 6b, 6c nicht mehr gerade, sondern in diesem Beispiel gebogen ausgeführt sind. Von Vorteil ist es dabei, wenn auch die gebogen ausgeführten Grenzen zwischen den Zonen 6a, 6b, 6c so gestaltet sind, dass über den Umfang der Lochung 3 die unterschiedlichen Elastizitäten der einzelnen Zonen 6a, 6b, 6c und des Teils des Rahmenelements 4 im Bereich der Aussparung 2 anliegen. Dennoch kann die Fläche der Zone 6b vergrößert werden, insbesondere ohne die Aufteilung der Zonen 6a, 6b, 6c um den Umfang der Lochung 3 zu verändern. Der radial aus der Lochung 3 heraus beginnende Verlauf der Grenzen ermöglicht außerdem eine sehr klare Abgrenzung der Zonen 6a, 6b, 6c bzw. ihrer Elastizitäten zu den jeweiligen Abschnitten des Umfangs der Lochung 3.

Eine weitere Ausführungsvariante wiederum mit den Schnitten gemäß der Linie B-B und A-A entsprechend der Figuren 2 und 3 ist in den Figuren 10 und 11 dargestellt. Der Unterschied besteht hier im Wesentlichen darin, dass auf die Aussparung 8 verzichtet worden ist. Die Lochung 3 berührt also das Rahmenelement 4 im Bereich des Schlitzes 2 tangential, ohne dass dieses die oben beschriebene Aussparung 8 aufweist. Die Grenzen zwischen den einzelnen Zonen 6a, 6b, 6c verlaufen, wie es aus der Darstellung der Figur 11 zu erkennen ist, wieder so, dass sie sich innerhalb der Lochung 3 in ihrer Verlängerung im Schnittpunkt der Lochung 3 mit dem Schlitz 2 entsprechend schneiden. Sie sind geradlinig ausgeführt, vergleichbar wie in der Darstellung der Figur 7. Sie könnten jedoch auch entsprechend der Ausgestaltung nach Figur 9, also mit gebogenen Grenzen, realisiert sein.

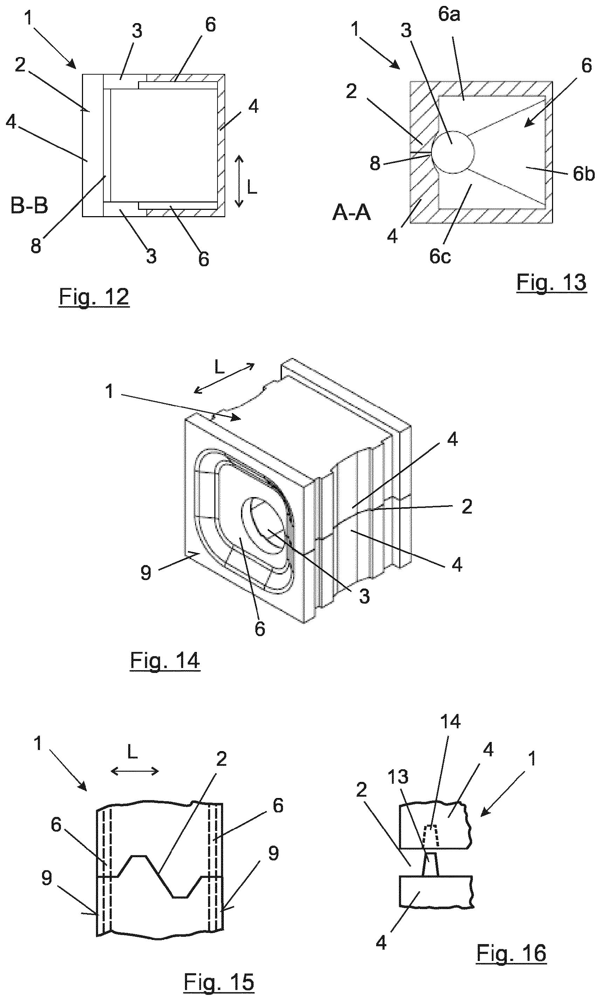

Eine weitere Ausführungsvariante der Tülle 1 ist in den Darstellungen der Figuren 12 und 13 wiederum in Schnittdarstellung entsprechen der Schnittlinien A-A und B-B zu erkennen. In dem hier dargestellten Fall ist die Aussparung 8 wieder vorhanden. Anders als in der Darstellung der Figuren 6, 7 und 9 ist die Aussparung 8 dabei nicht mit dem Durchmesser der Lochung, also dem in etwa kleinsten Durchmesser eines zuverlässig aufzunehmenden länglichen Gegenstands bzw. Kabels 5 ausgebildet, sondern mit einem größeren Durchmesser. Die kreissegmentförmig ausgestaltete Aussparung 8 ermöglicht so eine weitere Verbesserung der Abdichtung insbesondere bei Kabeln 5 bzw. länglichen Gegenständen mit einem deutlich größeren Durchmesser als es der Durchmesser der Lochung 3 ist. In diesem Fall muss für eine sinnvolle Abdichtung bei der Ausführungsvariante der Figuren 6, 7 und 9 das Material des Rahmenelements 4 minimal mitverformt werden, was ein elastisches Rahmenelement 4 erforderlich macht. Durch die immer noch kreissegmentförmige, aber mit einem größeren Durchmesser ausgeführte Aussparung in der Variante der Figuren 12 und 13, muss dies nicht mehr der Fall sein. Der Durchmesser der kreissegmentförmigen Aussparung 8 kann im Ausführungsbeispiel der Figuren 12 und 13 beispielsweise mit dem größten aufzunehmenden Durchmesser des länglichen Gegenstands 5 realisiert sein, sodass dieser einen minimalen Rest der Membran 6 zwischen den tangentialen Anlagepunkten der Lochung 3 und dem Rahmenelement 4 im Bereich des Schlitzes 2 bei kleineren Durchmessern zur Verbesserung der Abdichtung nutzen und beim größten aufzunehmenden Durchmesser entsprechend verdrängen kann. Wird der Durchmesser der kreissegmentförmigen Aussparung 8 in der Variante der Figuren 12 und 13 noch weiter vergrößert, so ist auch bei gegebenenfalls oberhalb des zulässigen Maximaldurchmessers eingelegten länglichen Gegenständen bzw. Kabeln 5 noch eine sehr gute Abdichtung möglich.

Der Aufbau der Membranen 6 hat dabei wieder, wie es in der Darstellung der Figur 13 zu erkennen ist, die drei Zonen 6a, 6b, 6c unterschiedlicher Elastizität in dem Aufbau mit einer geradlinigen Grenze. Auch hier wäre selbstverständlich eine gebogene Grenze analog zur Darstellung in Figur 9 oder auch eine andersartig ausgeformte Grenze mit einem beispielsweise wellenförmigen oder ähnlichen Verlauf prinzipiell denkbar. Die einzelnen Aspekte der Ausführungsvarianten lassen sich also gemäß aller bisher beschriebener Figuren untereinander kombinieren.

In der Darstellung der Figur 14 ist es so, dass die Tülle 1 in einer allgemein üblichen und gebräuchlichen Form dargestellt ist, welche an zwei ihrer Seiten quer zur Längsrichtung L zur Aufnahme beispielsweise in einem Rahmen, einem Steckplatz in einem Gehäuse oder dgl. ausgebildet ist. Die Oberseite ist hier eben ausgeführt, beispielsweise um mit einer anderen Tülle 1 verpresst werden zu können. Die Unterseite kann eben oder beispielsweise mit demselben Profil wie die Seitenkanten realisiert werden. Die Membran 6 mit der Lochung 3 ist hier gegenüber der in Figur 1 schematisch gezeigten Ausführungsvariante in Längsrichtung L gegenüber einer äußeren Oberfläche bzw. Außenfläche 9 der Tülle 1 auf ihrer jeweiligen Seite zurückversetzt, sodass das Verpressen des Kabels 5 zwischen den beiden Membranen 6 in einem Bereich erfolgt, in dem auch die Tülle 1 von dem Material des Gehäuses des Rahmens oder der sie aufnehmenden Einrichtung entsprechend verpresst wird, um so eine noch zuverlässigere Abdichtung zu realisieren.

In der Darstellung der Figur 15 ist ein Ausschnitt aus einer Tülle 1 mit einem möglichen Verlauf des Schlitzes 2 in der Längsrichtung L gezeigt. Der Schlitz 2 beginnt in diesem Fall mit einem geraden Abschnitt im Bereich der hier rechts dargestellten Membran 6, welche als innerhalb der Tülle 1 nur gestrichelt eingezeichnet ist, und verläuft dann in einer ersten trapezförmigen Stufe nach oben, um direkt in eine zweite nach unten verlaufende trapezförmige Stufe überzugehen, um wiederum mit einem geraden Abschnitt im Bereich der anderen Membran 6 zu enden. Selbstverständlich wäre auch ein gerader Abschnitt zwischen den beiden trapezförmigen Stufen denkbar und ebenso wäre es denkbar, dass die Trapeze direkt an den Außenseiten 9 der Tülle 1 anschließen, sodass also der gerade Teil ganz fehlt oder nur zwischen die beiden trapezförmigen Stufen vorhanden ist. Selbstverständlich sind auch andersartige Stufen wie beispielsweise rechteckige Stufen oder eine größere Anzahl von Stufen denkbar. Das Trapez bietet jedoch den Vorteil, dass die Teile einfach ineinander greifen können.

Im Prinzip ist auch nur eine trapezförmige Stufe nach oben in einer ansonsten geraden Ausführung des Schlitzes 2 in Längsrichtung L möglich. Die Ausführungsvariante kann dabei mit allen zuvor beschriebenen Ausführungsvarianten entsprechend kombiniert werden.

In der Darstellung der Figur 16 ist ergänzend ein Ausschnitt aus dem Schlitz 2 der Tülle 1 mit beabstandet gezeigten Rahmenelementen 4 dargestellt. Er weist beispielsweise in einem geraden Abschnitt, hier auf der unteren Oberfläche, einen kegelstumpfförmigen Führungselement 13 auf, welcher auf dem die Gegenseite des Schlitzes 2 ausbildenden Teil des Rahmenelementes 4 in eine korrespondierende Öffnung 14 eintauchen kann, wenn die beiden Oberflächen der Rahmenelemente 4 aufeinander zu liegen kommen, um den Schlitz 2 zu verschließen. Ein solches Führungselement 13 mit korrespondierender Öffnung 14 lässt sich mit unterschiedlichen Formgebungen des Schlitzes 2 kombinieren Es eignet sich insbesondere für einen Abschnitt, in dem der Schlitz 2 gerade verläuft. Er kann mehrfach über die Oberfläche des Schlitzes 2 verteilt angeordnet sein, um eine gute Positionierung der Teile des Rahmenelements 4 gegeneinander beim Verpressen der Tülle 1 zu gewährleisten und somit die Abdichtung des Schlitzes 2 nochmals weiter zu verbessern. Selbstverständlich kann es dabei vorgesehen sein, dass jedes der Rahmenteile 4 sowohl Führungselemente 13 als auch Öffnungen 14 aufweist, wobei die jeweiligen Führungselemente 13 des einen Teils des Rahmenelements 4 in die jeweils korrespondierenden Ausnehmungen 14 des jeweils anderen Teils eintauchen.

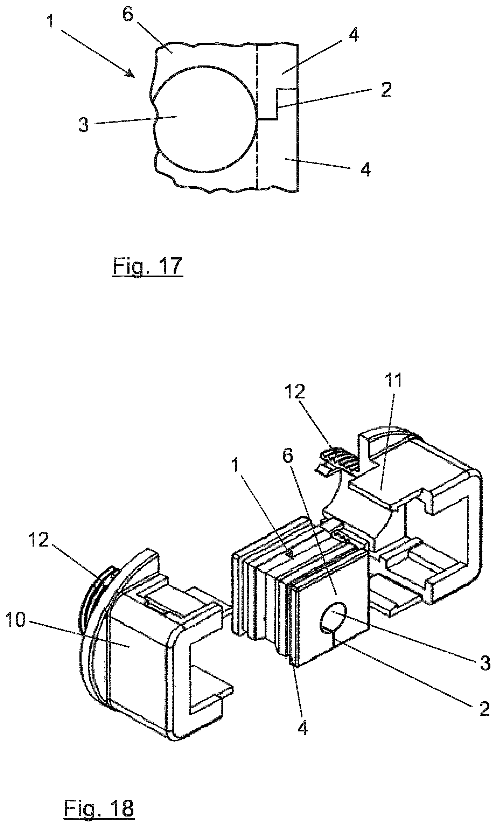

Eine grundsätzliche weitere Möglichkeit zur Ausgestaltung des Schlitzes 2, welche auch mit den zuvor beschriebenen Varianten kombiniert werden kann, ist in Figur 17 dargestellt. Die Blickrichtung ist hier entlang des einzulegenden länglichen Gegenstands, also in Längsrichtung L, auf die Tülle 1 beziehungsweise den dargestellten Ausschnitt derselben. Der Schlitz 2 verläuft dabei ausgehend von einem Berührungspunkt in jeder Querschnittsfläche quer zur Längsrichtung L von der Lochung 3 mit einer Stufe nach außen. Eine Mehrzahl von Stufen oder auch eine Ausgestaltung in der Art einer Nut und Feder, also einer nach oben und wieder einer nach unten führenden Stufe, sind hier ebenso denkbar. Diese seitliche Aufteilung der Rahmenelemente 4 im Bereich des Schlitzes 2 kann ebenfalls einer verbesserte Positionierung der Rahmenteile 4 zueinander und damit letztlich einer Verbesserung der Abdichtung dienen.

Die Tüllen 1 können dabei, wie es aus dem Stand der Technik bekannt ist, in unterschiedlichen Größen und Abmessungen sowohl hinsichtlich der Außenabmessungen als auch hinsichtlich der Lochungen 3 vorgehalten und eingesetzt werden. Sie können beispielsweise in Rahmen, wie es aus der eingangs genannten deutschen Patentschrift der Anmelderin bekannt ist, eingesetzt werden. In der Darstellung der Figur 15 ist ein weiterer möglicher Einsatzzweck anhand einer Explosionsdarstellung dargestellt. Die Tülle 1 mit dem Schlitz 2 und der Lochung 3 wird dabei zwischen zwei Hälften 10, 11 einer Kabeldurchführung aufgenommen, welche um die Tülle 1 herum verclippt werden können. Die Kabeldurchführung kann dann beispielsweise in ein rundes Loch in einem Schaltschrank oder dgl. eingebracht und mit einer Mutter auf einem Gewinde 12, welches nach dem Zusammensetzen der beiden Hälften und verclippen derselben entsteht, dort fixiert werden. Auch dies ist so weit aus dem Stand der Technik bekannt und stellt damit lediglich eine von vielen denkbaren und bekannten Möglichkeiten zur Anwendung derartiger Tüllen, in diesem Fall einer Tülle 1 mit der erfindungsgemäß ausgestalteten Anordnung der Membranen 6 und der Lochung 3 dar.

Die Tüllen 1 können neben der beschriebenen Verwendung mit einer Vielzahl von verschiedenartigen Rahmen, wie hier mit den Hälften 10 und 11, selbstverständlich auch ohne derartige Rahmen, in welchen sie aufgenommen sind, Verwendung finden. Beispielsweise könnten die Tüllen 1 außen einen runden Querschnitt und eine Nut aufweisen, um so beispielsweise in ein rundes Loch einer Blechwand, beispielsweise eines Schaltschranks oder dergleichen, eingebracht zu werden. Auch das Einbringen in geeignete Ausnehmungen eines Gehäuses zu Einführung von z.B. Kabeln in das Gehäuse ist möglich.

## Patentansprüche

1. Tülle (1) aus einem zumindest abschnittsweise elastischen Material zur Aufnahme wenigstens eines länglichen Gegenstands (5) zur Zugentlastung und Abdichtung, mit einem entlang eines Schlitzes (2) aufklappbaren äußeren Rahmenelement (4) mit wenigstens zwei in Längsrichtung des aufzunehmenden länglichen Gegenstands (5) beabstandeten Membranen (6), welche fluchtend zueinander jeweils eine gleich große Lochung (3) zur Aufnahme eines länglichen Gegenstandes (5) aufweisen,
**dadurch gekennzeichnet, dass**
die jeweilige Lochung (3) der wenigstens zwei Membranen (6) das Material des Rahmenelements (4) auf der Seite des Schlitzes (2) berührt, wobei wenigstens eine der Membranen (6) über den Umfang der Lochungen genau drei Zonen (6a, 6b, 6c) unterschiedlicher Elastizität aufweist, und wobei die quer zur Längsrichtung (L) des aufzunehmenden länglichen Gegenstands (5) mittlere, zwischen den beiden anderen Zonen (6a, 6c) angeordnete Zone (6b) eine höhere Elastizität aufweist als die beiden benachbarten Zonen (6a, 6c).

2. Tülle (1) nach Anspruch 1, **dadurch gekennzeichnet, dass** das Rahmenelement (4) und die Membran (6) aus demselben Material ausgebildet sind.

3. Tülle (1) nach Anspruch 1 oder 2, **dadurch gekennzeichnet, dass** genau zwei Membranen (6) vorgesehen sind.

4. Tülle (1) nach Anspruch 1, 2 oder 3, **dadurch gekennzeichnet, dass** das Rahmenelement (4) im Bereich der Berührung durch die Lochungen (3) eine Aussparung (8) aufweist.

5. Tülle (1) nach einem der Ansprüche 1 bis 4, **dadurch gekennzeichnet, dass** die Lochung (3) das Rahmenelement (4) im Bereich jedes Querschnitts senkrecht zur Längsrichtung (L) des aufzunehmenden länglichen Gegenstands (5) in dem Punkt berührt, in welchem das der Lochung (3) zugewandte Enden des Schlitzes (2) liegt.

6. Tülle (1) nach Anspruch 4 oder 5, **dadurch gekennzeichnet, dass** die Aussparung (8) im Querschnitt gesehen kreissegmentförmig ausgebildet ist.

7. Tülle (1) nach Anspruch 6, **dadurch gekennzeichnet, dass** das Kreissegment der Aussparung (8) einen größeren Durchmesser als die Lochungen (3) aufweist.

8. Tülle (1) nach einem der Ansprüche 1 bis 7, **dadurch gekennzeichnet, dass** die Zonen (6a, 6b, 6c) unterschiedlicher Elastizität eine unterschiedliche Dicke der Membran (6) aufweisen.

9. Tülle (1) nach einem der Ansprüche 1 bis 8, **dadurch gekennzeichnet, dass** die Zonen (6a, 6b, 6c) von der Lochung (3) ausgehende gerade Grenzen zueinander aufweisen.

10. Tülle (1) nach Anspruch 9, **dadurch gekennzeichnet, dass** Verlängerungen der Grenzen zwischen den Zonen (6a, 6b, 6c) sich im Punkt der Berührung der Lochungen (3) an dem Rahmenelement (4) schneiden.

11. Tülle (1) nach einem der Ansprüche 1 bis 8, **dadurch gekennzeichnet, dass** die Zonen (6a, 6b, 6c) von der Lochung (3) ausgehende gebogene Grenzen aufweisen.

12. Tülle (1) nach einem der Ansprüche 1 bis 11, **dadurch gekennzeichnet, dass** drei Zonen (6a, 6b, 6c) mit zwei unterschiedlichen Elastizitäten vorhanden sind, wobei die quer zur Längsrichtung (L) des aufzunehmenden länglichen Gegenstands (5) mittlere, zwischen den beiden anderen Zonen (6a, 6c) angeordnete Zone (6b) eine höhere Elastizität aufweist als die beiden benachbarten Zonen (6a, 6c).

13. Tülle (1) nach einem der Ansprüche 1 bis 12, **dadurch gekennzeichnet, dass** die beiden oder die beiden äußeren Membranen (6) jeweils in Längsrichtung (L) des aufzunehmenden länglichen Gegenstands gegenüber einer äußeren Begrenzungsfläche (9) der Tülle (1) nach innen versetzt angeordnet sind.

14. Tülle (1) nach einem der Ansprüche 1 bis 13, **dadurch gekennzeichnet, dass** der Schlitz (2) in Längsrichtung (L) des aufzunehmenden länglichen Gegenstandes (5) wenigstens eine, insbesondere trapezförmige, Stufe aufweist.

15. Tülle (1) nach einem der Ansprüche 1 bis 14, **dadurch gekennzeichnet, dass** die Teile des Rahmenelements (4) im Bereich des Schlitzes (2) wenigstens ein Führungselement (13) an dem einen Teil und wenigstens eine korrespondierende Öffnungen (14) an dem anderen Teil aufweisen.

16. Tülle (1) nach einem der Ansprüche 1 bis 15, **dadurch gekennzeichnet, dass** der Schlitz (2) quer zur Längsrichtung (L) des aufzunehmenden länglichen Gegenstandes (5) wenigstens eine Stufe aufweist.

## Claims

1. Bushing (1) made of a material which is elastic at least in some sections for accommodating at least one elongated object (5) for traction relief and sealing, having an outer frame element (4), which can be folded open along a slot (2), having at least two membranes (6), which are spaced apart in the longitudinal direction of the elongated object (5) to be accommodated and which each have a hole (3) of equal size aligned with one another to accommodate an elongated object (5),
**characterized in that**
the respective hole (3) of the at least two membranes (6) touches the material of the frame element (4) on the side of the slot (2), wherein at least one of the membranes (6) has precisely three zones (6a, 6b, 6c) of differing elasticity over the circumference of the holes, and wherein the middle zone (6b), which is arranged between the two other zones (6a, 6c), transversely to the longitudinal direction (L) of the elongated object (5) to be accommodated has a higher elasticity than the two adjacent zones (6a, 6c).

2. Bushing (1) as claimed in claim 1, **characterized in that** the frame element (4) and the membrane (6) are made of the same material.

3. Bushing (1) as claimed in claim 1 or 2, **characterized in that** precisely two membranes (6) are provided.

4. Bushing (1) as claimed in claim 1, 2, or 3, **characterized in that** the frame element (4) has a recess (8) in the area of the touch by the holes (3).

5. Bushing (1) as claimed in any one of claims 1 to 4, **characterized in that** the hole (3) touches the frame element (4) in the area of each cross section perpendicular to the longitudinal direction (L) of the elongated object (5) to be accommodated at the point in which the end of the slot (2) facing toward the hole (3) is located.

6. Bushing (1) as claimed in claim 4 or 5, **characterized in that** the recess (8) is designed in the form of a circle segment viewed in cross section.

7. Bushing (1) as claimed in claim 6, **characterized in that** the circle segment of the recess (8) has a larger diameter than the holes (3).

8. Bushing (1) as claimed in any one of claims 1 to 7, **characterized in that** the zones (6a, 6b, 6c) of differing elasticity have a different thickness of the membrane (6).

9. Bushing (1) as claimed in any one of claims 1 to 8, **characterized in that** the zones (6a, 6b, 6c) have straight boundaries in relation to one another originating from the hole (3).

10. Bushing (1) as claimed in claim 9, **characterized in that** extensions of the boundaries between the zones (6a, 6b, 6c) intersect at the point of the touch of the holes (3) on the frame element (4).

11. Bushing (1) as claimed in any one of claims 1 to 8, **characterized in that** the zones (6a, 6b, 6c) have curved boundaries originating from the hole (3).

12. Bushing (1) as claimed in any one of claims 1 to 11, **characterized in that** three zones (6a, 6b, 6c) having two different elasticities are provided, wherein the middle zone (6b), arranged between the two other zones (6a, 6c), transversely to the longitudinal direction (L) of the elongated object (5) to be accommodated has a higher elasticity than the two adjacent zones (6a, 6c).

13. Bushing (1) as claimed in any one of claims 1 to 12, **characterized in that** the two or the two outer membranes (6) are each arranged offset inward in the longitudinal direction (L) of the elongated object to be accommodated in relation to an outer boundary surface (9) of the bushing (1).

14. Bushing (1) as claimed in any one of claims 1 to 13, **characterized in that** the slot (2) has at least one, in particular trapezoidal step in the longitudinal direction (L) of the elongated object (5) to be accommodated.

15. Bushing (1) as claimed in any one of claims 1 to 14, **characterized in that** the parts of the frame element (4) in the area of the slot (2) have at least one guide element (13) on the one part and at least one corresponding opening (14) on the other part.

16. Bushing (1) as claimed in any one of claims 1 to 15, **characterized in that** the slot (2) has at least one step transversely to the longitudinal direction (L) of the elongated object (5) to be accommodated.

## Revendications

1. Douille (1) en matériau élastique au moins par tronçons, destinée à la réception d'au moins un objet (5) oblong en vue de soulager la traction et de réaliser l'étanchéité, avec un élément de cadre (4) extérieur, rabattable le long d'une fente (2), avec au moins deux membranes (6), espacées dans la direction longitudinale de l'objet (5) oblong à recevoir, lesquelles présentent, en alignement l'une par rapport à l'autre, respectivement une perforation (3) de même dimension pour la réception d'un objet (5) oblong,
**caractérisée en ce que**
la perforation (3) respective des au moins deux membranes (6) touche le matériau de l'élément de cadre (4) sur le côté de la fente (2), au moins une des membranes (6) présentant, sur le pourtour des perforations, précisément trois zones (6a, 6b, 6c) d'élasticité différente, et la zone (6b) centrale disposée entre les deux autres zones (6a, 6c) transversalement à la direction longitudinale (L) de l'objet (5) oblong à recevoir présentant une élasticité plus élevée que les deux zones voisines (6a, 6c).

2. Douille (1) selon la revendication 1, **caractérisée en ce que** l'élément de cadre (4) et la membrane (6) sont réalisés dans un matériau identique.

3. Douille (1) selon la revendication 1 ou 2, **caractérisée en ce qu'**il est prévu précisément deux membranes (6).

4. Douille (1) selon la revendication 1, 2 ou 3 **caractérisée en ce que**, dans la zone de contact par les perforations (3), l'élément de cadre (4) présente un évidement (8).

5. Douille (1) selon l'une des revendications 1 à 4, **caractérisée en ce que**, dans la zone de chaque section perpendiculairement à la direction longitudinale (L) de l'objet (5) oblong à recevoir, la perforation (3) touche l'élément de cadre (4) au point où est située l'extrémité de la fente (2) tournée vers la perforation (3).

6. Douille (1) selon la revendication 4 ou 5, **caractérisée en ce que** l'évidement (8) est, vu en section transversale, constitué en forme de segment de cercle.

7. Douille (1) selon la revendication 6, **caractérisée en ce que** le segment de cercle de l'évidement (8) présente un plus grand diamètre que les perforations (3).

8. Douille (1) selon l'une des revendications 1 à 7, **caractérisée en ce que** les zones (6a, 6b, 6c) d'élasticité différente présentent une épaisseur de la membrane (6) différente.

9. Douille (1) selon l'une des revendications 1 à 8, **caractérisée en ce que** les zones (6a, 6b, 6c) présentent les unes par rapport aux autres des limites rectilignes à partir de la perforation (3).

10. Douille (1) selon la revendication 9, **caractérisée en ce que** des prolongements des limites entre les zones (6a, 6b, 6c) se coupent au point de contact des perforations (3) sur l'élément de cadre (4).

11. Douille (1) selon l'une des revendications 1 à 8, **caractérisée en ce que** les zones (6a, 6b, 6c) présentent des limites courbes à partir de la perforation (3).

12. Douille (1) selon l'une des revendications 1 à 11, **caractérisée en ce qu'**il existe trois zones (6a, 6b, 6c) ayant deux élasticités différentes, la zone (6b) centrale disposée entre les deux autres zones (6a, 6c) transversalement à la direction longitudinale (L) de l'objet (5) oblong à recevoir présentant une élasticité plus élevée que les deux autres zones (6a, 6c) voisines.

13. Douille (1) selon l'une des revendications 1 à 12, **caractérisée en ce que** les deux membranes ou les deux membranes (6) extérieures sont respectivement disposées dans la direction longitudinale (L) de l'objet oblong à recevoir, de façon décalée vers l'intérieur, par rapport à une surface de limitation (9) extérieure de la douille (1).

14. Douille (1) selon l'une des revendications 1 à 13, **caractérisée en ce que**, dans la direction longitudinale (L) de l'objet (5) oblong à recevoir, la fente (2) présente au moins un gradin, en particulier de forme trapézoïdale.

15. Douille (1) selon l'une des revendications 1 à 14, **caractérisée en ce que**, dans la zone de la fente (2), les parties de l'élément de cadre (4) présentent au moins un élément de guidage (13) sur une partie et au moins une ouverture (14) correspondante sur l'autre partie.

16. Douille (1) selon l'une des revendications 1 à 15, **caractérisée en ce que** la fente (2) présente au moins un gradin transversalement à la direction longitudinale (L) de l'objet (5) oblong à recevoir.
